# EUROPÄISCHE PATENTSCHRIFT

(11) **EP 3 512 382 B1**
(45) Veröffentlichungstag und Bekanntmachung des Hinweises auf die Patenterteilung: **21.10.2020**
(21) Anmeldenummer: 17777154.0
(22) Anmeldetag: 13.09.2017
(51) Int. Cl.: A47F 3/00, A47F 3/04, A47B 31/02, F25D 31/00, F25B 39/02, F28F 1/22

(54) **KÜHL- UND WÄRMEPLATTE**
COOLING AND HEATING PLATE
PLAQUE DE RÉFRIGÉRATION ET DE CHAUFFE

(30) Priorität: 13.09.2016 AT 508172016
(43) Veröffentlichungstag der Anmeldung: 24.07.2019
(73) Patentinhaber: Josef Höller Gmbh, 3300 Amstetten (AT)
(72) Erfinder: HÖLLER, Josef, 3363 Neufurth (AT); HÖLLER, Joachim, 3311 Zeillern (AT)
(74) Vertreter: Müllner, Martin
(86) Internationale Anmeldenummer: PCT/AT2017/060227
(87) Internationale Veröffentlichungsnummer: WO 2018/049452

(56) Entgegenhaltungen:
- WO-A1-2015/161332
- WO-A2-2009/049240
- CN-A- 102 151 818
- DE-A1-102007 023 058
- JP-A- 2004 027 988
- US-A- 5 996 842

## Beschreibung

### Technisches Gebiet

Die vorliegende Erfindung betrifft eine Kühl- und Wärmeplatte, insbesondere für die Präsentation von Speisen und Getränken, bei der die Platte mit einem Kühlaggregat verbunden ist und an ihrer Unterseite eine elektrische Heizeinrichtung aufweist, wobei die Platte als Mehrschichtplatte mit einer Oberplatte vorzugsweise aus Chromnickelstahl und einer darunter liegenden Aluminiumplatte mit Kühlmittelkanälen ausgebildet ist.

### Stand der Technik

Eine derartige Kühl- und Wärmeplatte ist aus patcit0001:WO WO 2015/161332 --. bekannt. Gemäß dieser Schrift besteht die Kühl- und Wärmeplatte aus drei Lagen: aus einer Oberplatte aus Chromstahl von ca. 1,5 mm Stärke, einer Mittelplatte aus Aluminium von ca. 5 mm Stärke und einer Unterplatte ebenfalls aus Chromstahl von ca. 1,5 mm Stärke. In die Mittelplatte sind Kühlmittelkanäle eingearbeitet. Die Verbindung zwischen der Mittelplatte und der Ober- und Unterplatte erfolgt gemäß dieser Schrift durch Walzen.

Auf der Unterseite der Unterplatte ist eine Heizmatte angeordnet, die durch eine thermische sowie elektrische Isolierung abgedeckt und von einer Abdeckschale dicht verschlossen ist.

Nachteilig sind an dieser Platte zwei Dinge: Erstens halten die Kühlmittelkanäle nur relativ geringen Drücken stand, und zweitens kommt es vor, dass durch den hohen Druck beim Walzen die Kühlmittelkanäle bewirken, dass die Oberplatte nicht ganz eben ist, sodass bei entsprechendem Lichteinfall die Kühlmittelkanäle erkennbar sind.

Das zukunftsträchtigste Kältemittel ist derzeit Kohlendioxid, da es auf die Ozonschicht keinen Einfluss hat und verglichen mit anderen Kältemitteln kaum Einfluss auf den Treibhauseffekt hat. Kohlendioxid benötigt aber hohe Drücke, auch auf der Niederdruckseite (also nach dem Verdampfer). Diesen Drücken ist die bekannte Kühl- und Wärmeplatte nicht gewachsen.

### Darstellung der Erfindung

Es ist Aufgabe der vorliegenden Erfindung, diese Nachteile zu beseitigen und eine Kühl- und Wärmeplatte zu schaffen, deren Kühlmittelkanäle auch hohen Drücken standhalten und bei der die Oberplatte eben ist.

Diese Aufgabe wird durch eine Kühl- und Wärmeplatte der eingangs genannten Art erfindungsgemäß dadurch gelöst, dass in der Aluminiumplatte als Kühlmittelkanäle zumindest ein Stahlrohr mit einer Druckfestigkeit von zumindest 50 bar eingegossen ist.

Erfindungsgemäß werden also die Kühlmittelkanäle nicht durch Ausfräsen der Aluminiumplatte hergestellt, sondern durch ein Stahlrohr, das bei der Herstellung der Aluminiumplatte eingegossen wird. Dadurch ist der Wärmeübergang zwischen dem Stahlrohr und dem Aluminium optimal, und die Druckfestigkeit ist infolge des Stahlrohrs gegeben. Insgesamt ist der Wärmeübergang vom Kältemittel zur Aluminiumplatte nicht wesentlich schlechter als bei der eingangs beschriebenen bekannten Lösung.

Wenn das Stahlrohr mäanderförmig gebogen ist, kann man auch bei großen Kühl- und Wärmeplatten mit einem einzigen Stahlrohr auskommen.

Da erfindungsgemäß jede Aluminiumplatte durch Gießen hergestellt wird, ergibt sich die Möglichkeit, in die Aluminiumplatte auch Befestigungselemente einzugießen, sodass für das Anbringen der Befestigungselemente (z.B. Schraubenbolzen) keine zusätzlichen Bearbeitungsvorgänge notwendig sind.

Damit das Stahlrohr hohen Drücken standhält und Rohrbrüche unwahrscheinlich sind, ist bevorzugt, dass das Stahlrohr nahtlos ist.

Aus Gründen des Herstellungsaufwandes und des Gewichts der Kühl- und Wärmeplatte sollte die Aluminiumplatte dünn sein, andererseits sollte sichergestellt sein, dass das Stahlrohr auch bei geringen Abweichungen aus der geplanten Mittellage ausreichend überdeckt ist. Nach einem weiteren bevorzugten Merkmal ist daher vorgesehen, dass die Aluminiumplatte eine Dicke hat, die rund doppelt so groß ist wie der Außendurchmesser des Stahlrohrs.

Vorzugsweise ist die elektrische Heizeinrichtung eine Silicon-Flächenheizung, die auf der Unterseite der Aluminiumplatte aufgebracht ist. Solche Silicon-Flächenheizungen sind flach, geben gleichmäßig Wärme ab und können hohe Temperaturen erzeugen. Sie sind daher für die erfindungsgemäßen Kühl- und Heizplatten gut geeignet.

### Kurze Beschreibung der Zeichnungen

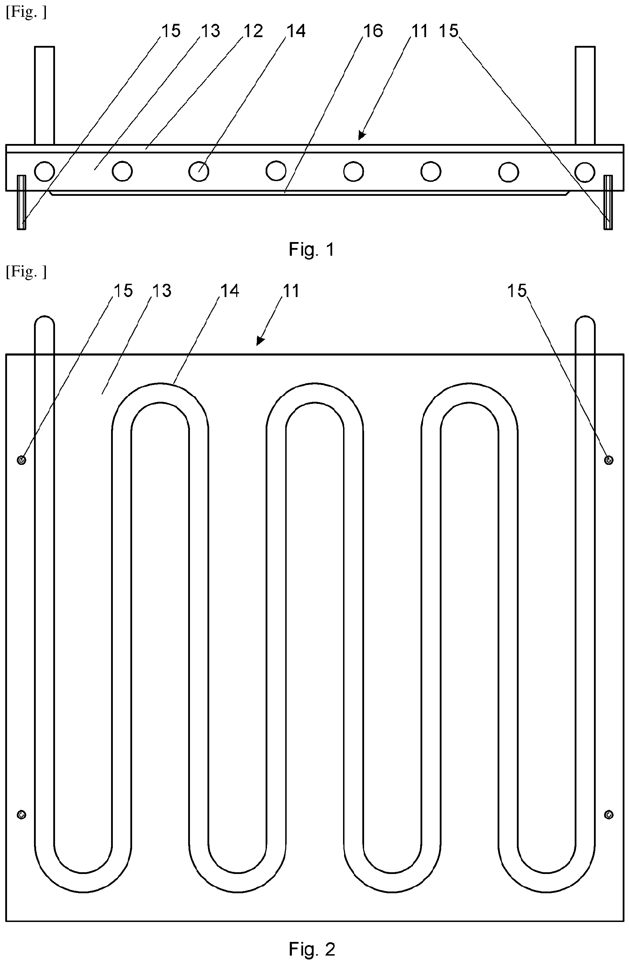

Anhand der beiliegenden Zeichnung wird die vorliegende Erfindung näher erläutert. Es zeigt: Fig. 1 einen Vertikalschnitt durch eine erfindungsgemäße Kühl- und Wärmeplatte; und Fig. 2 einen Horizontalschnitt durch dieselbe Kühl- und Wärmeplatte.

### Bester Weg zur Ausführung der Erfindung

Die Kühl- und Wärmeplatte ist eine Mehrschichtplatte 11 bestehend aus einer Aluminiumplatte 13 und einer Oberplatte 12. Die Oberplatte 12 trägt die zu wärmenden oder zu kühlenden Getränke und muss daher einerseits aus einem lebensmitteltechnisch unbedenklichen Material bestehen und andererseits über Jahre unversehrt aussehen. Bevorzugtes Material für die Oberplatte 12 ist Chromnickelstahl.

In die Aluminiumplatte 13 ist ein mäanderförmig gebogenes Stahlrohr 14 eingegossen. Dieses Stahlrohr 14 hat eine Druckfestigkeit von zumindest 50 bar und kann daher auch den Drücken standhalten, die für Kältemaschinen mit Kohlendioxid als Kältemittel notwendig sind. Da das Stahlrohr 14 in das Aluminium eingegossen ist, ist der Wärmeübergangswiderstand zwischen dem Stahlrohr 14 und der Aluminiumplatte 13 gering. Zwischen dem Kältemittel (z.B. Kohlendioxid) und der Aluminiumplatte 13 kommt natürlich der Wärmewiderstand des Stahlrohrs 14 hinzu, dieses sollte daher möglichst dünn sein. Wenn man ein nahtloses Stahlrohr 14 verwendet, kann man mit Wandstärken von maximal 1 mm auskommen, ohne die notwendige Druckfestigkeit zu gefährden.

In die Aluminiumplatte 13 sind weiters Befestigungselemente 15 eingegossen. An der Unterseite der Aluminiumplatte 13 ist eine elektrische Silicon-Flächenheizung 16 angebracht. Zum Heizen wird diese Silicon-Flächenheizung eingeschaltet, wobei dann natürlich das Kühlaggregat abgeschaltet wird. Das Kühlmittel kann im Stahlrohr 14 verbleiben. Kohlendioxid überschreitet dann zwar die kritische Temperatur, aber das Stahlrohr 14 hält den dabei entstehenden Drücken stand.

Zur Temperaturmessung (sowohl beim Heizen als auch beim Kühlen) kann in üblicher Weise ein Pt100-Temperaturfühler vorgesehen werden, als Regler ist z.B. der Regler ST121-KD1TA.03FS von STÖRK-TRONIC geeignet.

Mit dieser Kühl- und Wärmeplatte kann beim Kühlen eine optimale Temperatur-übertragung bis -30°C erreicht werden. Die Temperatur von -30°C dient zur Produktion von Speiseeis, direkt vor den Augen des Konsumenten. Beim Wärmen kann eine Temperatur bis zu 140°C erreicht werden, sodass Speisen ausreichend warmgehalten werden können. Der Boden der Kühl- und Wärmeplatte wird den Anforderungen entsprechend isoliert.

Die Kühl- und Wärmeplatte kann mit Kohlendioxid betrieben werden, sodass die sonst üblichen Treibhausgase vermieden werden können. Sie kann aber selbstverständlich auch mit allen herkömmlichen Kältemitteln betrieben werden, ist also auch als Ersatzteil für bestehende Anlagen geeignet. Für ein direkt bei der Kühl- und Wärmeplatte angebrachtes Kühlaggregat, das entsprechend kompakt sein muss, ist Isobutan als Kältemittel am besten geeignet.

Die Oberplatte 12 und die Aluminiumplatte 13 sind vorzugsweise mit einem gut Wärme leitenden Kleber miteinander verklebt. Wenn man sie durch Walzen miteinander verbindet, besteht die Gefahr, dass das Stahlrohr 14 dabei deformiert wird, sodass Querschnittsverengungen entstehen.

## Patentansprüche

1. Kühl- und Wärmeplatte, insbesondere für die Präsentation von Speisen und Getränken, bei der die Platte mit einem Kühlaggregat verbunden ist und an ihrer Unterseite eine elektrische Heizeinrichtung aufweist, wobei die Platte als Mehrschichtplatte (11) mit einer Oberplatte (12) vorzugsweise aus Chromnickelstahl und einer darunter liegenden Aluminiumplatte (13) mit Kühlmittelkanälen ausgebildet ist, **dadurch gekennzeichnet, dass** in der Aluminiumplatte (13) als Kühlmittelkanäle zumindest ein Stahlrohr (14) mit einer Druckfestigkeit von zumindest 50 bar eingegossen ist.

2. Kühl- und Wärmeplatte nach Anspruch 1, **dadurch gekennzeichnet, dass** das Stahlrohr (14) mäanderförmig gebogen ist.

3. Kühl- und Wärmeplatte nach Anspruch 1 oder 2, **dadurch gekennzeichnet, dass** in die Aluminiumplatte (13) auch Befestigungselemente (15) eingegossen sind.

4. Kühl- und Wärmeplatte nach einem der Ansprüche 1 bis 3, **dadurch gekennzeichnet, dass** das Stahlrohr (14) nahtlos ist.

5. Kühl- und Wärmeplatte nach einem der Ansprüche 1 bis 4, **dadurch gekennzeichnet, dass** die Aluminiumplatte (13) eine Dicke hat, die rund doppelt so groß ist wie der Außendurchmesser des Stahlrohrs (14).

6. Kühl- und Wärmeplatte nach einem der Ansprüche 1 bis 5, **dadurch gekennzeichnet, dass** die elektrische Heizeinrichtung eine Silicon-Flächenheizung (16) ist, die auf der Unterseite der Aluminiumplatte (13) aufgebracht ist.

## Claims

1. A cooling and heating plate, in particular for the presentation of food and beverages in which the plate is connected to a cooling unit and includes an electrical heating device on its underside wherein the plate is formed as a multilayered plate (11) comprising an upper plate (12), preferably consisting of chrome-nickel steel, and an aluminium plate (13) situated below having coolant channels, **characterised in that** at least one steel pipe (14) having a pressure resistance of at least 50 bar is moulded in the aluminium plate (13) as coolant channels.

2. The cooling and heating plate according to claim 1, **characterised in that** the steel pipe (14) is bent in a meander shape.

3. The cooling and heating plate according to claim 1 or 2, **characterised in that** fastening elements (15) are also moulded into the aluminium plate (13).

4. The cooling and heating plate according to any of claims 1 to 3, **characterized in that** the steel pipe (14) is seamless.

5. The cooling and heating plate according to any of claims 1 to 4, **characterised in that** the aluminium plate (13) has a thickness which is approximately twice as large as the outer diameter of the steel pipe (14).

6. The cooling and heating plate according to any of claims 1 to 5, **characterized in that** the electrical heating device is a silicone panel heating (16) which is applied to the underside of the aluminium plate (13).

## Revendications

1. Plaque refroidissante et chauffante, destinée notamment à la présentation de nourriture et de boissons, ladite plaque étant reliée à un organe de refroidissement et comportant sur sa face inférieure un dispositif chauffant électrique, ladite plaque étant réalisée sous forme d'une plaque multicouche (11) pourvue d'une plaque supérieure (12) qui est préférentiellement en acier au nickel-chrome et d'une plaque en aluminium (13) qui est disposée en-dessous de cette dernière et qui comporte des canaux pour réfrigérant, **caractérisée en ce qu'**au sein de le plaque en aluminium (13), les canaux pour réfrigérant sont réalisés en y intégrant, lors de la coulée, au moins un tube en acier (14) ayant une résistance à la compression d'au moins 50 bar.

2. Plaque refroidissante et chauffante selon la revendication 1, **caractérisée en ce que** le tube en acier (14) suit une trajectoire curviligne en méandres.

3. Plaque refroidissante et chauffante selon les revendications 1 ou 2, **caractérisée en ce que** la plaque en aluminium (13) comporte également des éléments de fixation (15) qui y sont intégrés lors de la coulée.

4. Plaque refroidissante et chauffante selon l'une des revendications 1 à 3, **caractérisée en ce que** le tube en acier (14) est sans soudure.

5. Plaque refroidissante et chauffante selon l'une des revendications 1 à 4, **caractérisée en ce que** la plaque en aluminium (13) a une épaisseur qui représente environ le double du diamètre extérieur du tube en acier (14).

6. Plaque refroidissante et chauffante selon l'une des revendications 1 à 5, **caractérisée en ce que** le dispositif chauffant électrique est un chauffage surfacique en silicone (16) qui est appliqué sur la face inférieure de la plaque en aluminium (13).
